**Europäisches Patentamt**

**European Patent Office**

**Office européen des brevets**

(11) Veröffentlichungsnummer: **0 268 035**
**B1**

(12) **EUROPÄISCHE PATENTSCHRIFT**

(45) Veröffentlichungstag der Patentschrift:
**19.12.90**

(51) Int. Cl.⁵: **C08F 8/32**, C08F 279/02

(21) Anmeldenummer: **87113379.9**

(22) Anmeldetag: **14.09.87**

(54) **Wasserverdünnbare Bindemittel auf Polybutadienbasis, deren Herstellung und Verwendung.**

(30) Priorität: **23.09.86 DE 3632277**

(43) Veröffentlichungstag der Anmeldung:
**25.05.88 Patentblatt 88/21**

(45) Bekanntmachung des Hinweises auf die Patenterteilung:
**19.12.90 Patentblatt 90/51**

(84) Benannte Vertragsstaaten:
**AT CH DE ES FR GB IT LI NL**

(56) Entgegenhaltungen:
**DE-A- 2 754 733**
**FR-A- 2 300 108**
**US-A- 4 009 228**

(73) Patentinhaber: **BAYER AG,**
**D-5090 Leverkusen 1 Bayerwerk(DE)**

(72) Erfinder: **Blum, Harald, Dr., Moorenstr. 14,**
**D-4175 Wachtendonk 1(DE)**
Erfinder: **Fleiter, Lothar, Dr., Bärenstr. 7,**
**D-4150 Krefeld 1(DE)**
Erfinder: **Höhlein, Peter, Dr., Windmühlenweg 3e,**
**D-4152 Kempen 3(DE)**

## Beschreibung

Die Erfindung betrifft wäßrige Bindemittel auf Polybutadienbasis, deren Herstellung, sowie die Verwendung für lufttrocknende Grundierungen.

Wäßrige Überzugsmittel gewinnen in zunehmendem Maß an Bedeutung, da sie frei von organischen Hilfslösungsmitteln verarbeitet werden können.

Bindemittel auf Basis von Maleinsäureanhydrid (MSA) und Polybutadien werden dabei, auch in modifizierter Form, häufig eingesetzt, da so verseifungs- und lagerstabile Lacke mit gutem Eigenschaftsniveau hergestellt werden können. Diese zeigen z.B. nach der DE-C 1 292 288 und der DE-B 1 219 684 gegenüber nicht modifizierten Polybutadienen eine verbesserte Haftung. Durch Pfropfreaktion ungesättigter Monomerer auf Polybutadien-MSA-Addukte werde Produkte mit verbesserten Eigenschaften erhalten (z.B. DE-B 2 733 274, 2 633 362, 2 754 733).

Sowohl die Polybutadien-MSA-Addukte, als auch die daraus hergestellten Pfropfpolymerisate können partiell oder vollständig verestert, amidiert oder imidiert werden. Die bei der Umsetzung mit Alkoholen oder sekundären Aminen entstandenen Halbester oder Halbamide haben freie Carboxylgruppen, die partiell oder vollständig neutralisiert werden können, wodurch wasserlösliche bzw. wasserdispergierbare Bindemittel erhalten werden (z.B. DE-B 2 507 809, DE-A 2 733 135). Aus der DE-A 2 553 593 sind modifizierte, wasserverdünnbare, carboxylgruppentragende Polymerölimide bekannt, die durch Umsetzung eines Polybutadien-MSA-Adduktes mit Ammoniak oder Harnstoff erhalten werden. In den DE-B 2 754 733 bzw. 2 616 591 werden Polybutadien-MSA-Addukte mit Diaminen umgesetzt, die eine primäre und eine tertiäre Stickstoffgruppe enthalten. Dieses Bindemittel werden überwiegend für hitzehärtbare, kathodisch abscheidbare Lacke eingesetzt.

Die bekannten Bindemittel haben den Nachteil, daß größere Mengen organischer Lösungsmittel zur Verbesserung der Wasserverdünnbarkeit, zur Einstellung der Viskosität und für eine gute Verarbeitbarkeit erforderlich sind. Außerdem besteht im allgemeinen eine ungenügende Verträglichkeit dieser Bindemittel mit den üblichen Korrosionsschutzmitteln wie z.B. Zinkoxid und Zinkphosphat. Die unter Verwendung von Zinkoxid und Zinkphosphat hergestellten Lacklösungen zeigen vor allem bei Abwesenheit von organischen Hilfslösungsmitteln unzureichende Stabilität. Es können nach dem Anreiben entweder keine stabilen Lacke erhalten werden, oder die Lacklösungen zeigen innerhalb weniger Tage eine starke Bodensatzbildung. Unter Verwendung besonders hydrophilen Ringöffnungsreagenzien, wie z.B. Diethylamin können nach dem Stand der Technik (DE-B 3 428 295) zinkpigmenthaltige Lacke hergestellt werden, die jedoch durch ihre Hydrophile bedingt zu unbefriedigenden Wasserfestigkeiten und Korrosionsschutzergebnissen führen.

Aufgabe der Erfindung ist daher ein Bindemittel auf Basis niedermolekularer Polybutadien-MSA-Addukte zu entwickeln, das ohne organische Lösungsmittel verarbeitet werden kann. Sie sollen in Kombination mit zinkhaltigen Pigmenten zu lagerstabilen Lacken führen. Eine verbesserte Wasserfestigkeit und bessere Korrosionsschutzergebnisse sollten sie außerdem zeigen.

Es wurde nun gefunden, daß durch Pfropfpolymerisation modifizierte Polybutadien-MSA-Addukte, die mit Aminocarbonsäuren so umgesetzt werden, daß die eingebauten Anhydridgruppen des Pfropfcopolymeren zu mindestens 50 %, bevorzugt mindestens 65 % in Imide überführt werden, gute Wasserverdünnbarkeit zeigen, nachdem die durch die Aminocarbonsäuren eingeführten Carboxylgruppen neutralisiert worden sind.

Die so erhaltenen Bindemittel sind mit zinkhaltigen Pigmenten verträglich und enthalten kein organisches Lösungsmittel. Die daraus hergestellten Korrosionsschutzlacke zeichnen sich durch verbesserte Wasserfestigkeit aus und sind korrosionsbeständig.

Gegenstand der Erfindung sind Wasser verdünnbare, zu 50 bis 100% neutralisierte Carboxylgruppen enthaltende Bindemittel auf Polybutadienbasis, hergestellt durch Umsetzung von:

A) 6-18 % Maleinsäureanhydrid
B) 45-65 % Polybutadien
C) 10-40 % ethylenisch ungesättigten Pfropfmonomeren
D) 3-18% Aminocarbonsäuren,
wobei die Komponenten A bis D so gewählt werden, daß deren Summe 100 % beträgt.

Die Carboxylgruppen des Harzes werden zu 50 bis 100 % neutralisiert. Die Bindemittel sind wasserverdünnbar.

Bevorzugte Polybutadiene B) enthalten mindestens 70 %, in der Regel mindestens 90 % 1,3-Butadien und bis zu 30 %, in der Regel bis zu 10 %, copolymerisierbare Monomere, z.B. Styrol, Vinyltoluol, Butylacrylat, Ethylacrylat, Diethylmaleat, Acrylnitril, Methacrylnitril, 2,3-Dimethylbutadien-1,3, Isopren. Bevorzugte Polybutadiene besitzen als Zahlenmittel bestimmte Molekulargewichte von 800 bis 5000. Iodzahlen nach Wijs von 300 bis 470 mg Iod/g Substanz sowie 85 bis 99 % 1,4-cis bzw. 1,4-trans Doppelbindungen und 1 bis 15 % Vinyldoppelbindungen. Es können auch Mischungen verschiedener Polybutadiene eingesetzt werden.

Bevorzugte Pfropfmonomere C) können sein:
Styrol, Methylstyrol, p-Chlorstyrol, Vinyltoluol, Acrylsäure, Methacrylsäure, Acrylsäure- und Methacrylsäureester von $C_1$-$C_{10}$-Alkoholen, Glycidylmethacrylat, Hydroxyethyl(meth)acrylat, Acrylnitril,

2

Methacrylnitril, Acrylamid, Methacrylamid, Vinylchlorid, N-Methylacrylamid und Mischungen dieser Monomere.

Aminocarbonsäuren D) mit der allgemeinen Formel:

H$_2$N-R-COOH,

wobei R steht für:

aliphatische, cycloaliphatische und aromatische Kohlenwasserstoffe, die gegebenenfalls mit verschiedenen Substituenten versehen sind, können z.B. sein:

Aminoessigsäure, 3-Aminopropansäure, 2-Aminopropansäure, 4-Aminobutansäure, Aminopentansäure, 6-Aminohexansäure, 5-Aminohexansäure, 4-Aminohexansäure, 3-Aminohexansäure, 2-Aminohexansäure, Aminoheptansäure, Aminooctansäure, Aminononansäure, Aminodecansäure, Aminoundecansäure, 2-Amino-4-methylthiobutansäure, 2-Aminobenzoesäure, 2-Amino-4-chlorbenzoesäure, 2-Amino-5-chlorbenzoesäure, 2-Amino-6-chlorbenzoesäure, 2-Amino-4-nitrobenzoesäure, 2-Amino-5-nitrobenzoesäure, 4-Aminobenzoesäure, 5-Amino-2-chlorbenzoesäure, 3-Amino-5-nitrobenzoesäure, 4-Amino-2-nitrobenzoesäure, 4-Acetylamino-2-aminobenzoesäure, 3-Amino-4-methylbenzoesäure, 3-(3-Aminophenyl)-2-propansäure, 1-Aminocyclopentan-1-carbonsäure, 1-Aminocyclohexancarbonsäure. Es können Mischungen der Aminocarbonsäuren eingesetzt werden.

Die Herstellung der Addukte aus Maleinsäureanhydrid A) und Polybutadien B) erfolgt nach bekannten Methoden, wie z.B. Erhitzen der beiden Komponenten für 4 bis 6 Stunden auf 180 bis 200°C unter Durchleiten eines Inertgasstromes (z.B. N$_2$, Argon) unter Zusatz eines Polymerisationsinhibitors. Geeignete Polymerisationsinhibitoren sind z.B. Hydrochinon, 2,5-Di-tert.-butylhydrochinon, Hydrochinonmonomethylether, Kupferverbindungen wie Kupfernaphtenat oder Kupferacetylacetonat, Phenylendiamin, Pyrogallol, Naphthol.

Die Pfropfreaktion der ethylenisch ungesättigten Monomeren C) auf das Polybutadien-MSA-Addukt wird bevorzugt als Massepolymerisation in Gegenwart eines Radikalbildners bei Temperaturen von 80 bis 180°C durchgeführt. Die Monomeren werden dabei in der Regel zusammen mit Initiator und gegebenenfalls Molekulargewichtsregler auf einmal zugegeben. Zur besseren Kontrolle des Reaktionsverlaufs können Monomere und/oder Initiator auch über einen Zeitraum von 1 bis 3 Stunden zudosiert werden.

Als Radikalbildner sind bevorzugt Peroxide wie Dibenzoylperoxid, Cumolhydroperoxid, Di-tert.-butylperoxid, Dilaurylperoxid, tert.-Butyl-per-2-ethylhexanoat, tert.-Butylpermaleinat, tert.-Butylperbenzoat, Dicumylperoxid, Didecanoylperoxid.

Geeignete Molekulargewichtsregler sind z.B. Thiole wie n-Dodecylmercaptan, tert.-Dodecylmercaptan, 2-Mercaptoethanol.

Die Imidierungsreaktion kann in Lösung, bevorzugt jedoch in Masse durchgeführt werden. Die Aminocarbonsäure wird dabei zu der 100 bis 130°C heißen Harzschmelze gegeben und die Mischung 2 bis 3 Stunden gerührt. Anschließend wird die Reaktionstemperatur auf 140 bis 160°C erhöht und das dann gebildete Reaktionswasser abdestilliert. Das Reaktionsende kann an der abgespaltenen Wassermenge bzw. an der verbleibenden Restsäurezahl erkannt werden.

Das so hergestellte 100 %ige Harz kann anschließend durch Zugabe eines Wasser/Neutralisationsmittelgemisches gelöst werden. Bevorzugt wird das Einrühren der heißen Harzschmelze in eine auf 40 bis 50°C erwärmte, wäßrige Neutralisationsmittellösung.

Nach der Neutralisation ist das Bindemittel wasserverdünnbar. Es enthält Salzgruppen, die bei der Reaktion zwischen Neutralisationsmittel und den durch die Aminocarbonsäure eingeführten Carboxylgruppen des Harzes entstanden sind.

Zur Neutralisation können z.B. wäßrige, anorganische Basen, wie Natrium- und Kaliumhydroxid oder Ammoniak, organische Basen, z.B. Amine, wie Dimethylamin, Diethylamin, Dipropylamin, Trimethylamin, Triethylamin, Tripropylamin, Diethanolamin, Methyldiethanolamin, Dimethylethanolamin oder Mischungen verschiedener Neutralisationsmittel verwendet werden.

Durch das Neutralisationsmittel wird der pH-Wert des wäßrigen Bindemittels auf 6,5 bis 9,5 eingestellt.

In seiner wäßrigen Form kann das Harz direkt zur Herstellung klarer Filme verwendet werden. Es können weiterhin anorganische Pigmente, z.B. Eisenoxide, Bleioxid, Strontiumchromat, Zinkoxid, Zinkphosphat, Titandioxid oder organische Farbpigmente, gegebenenfalls als Mischungen zugesetzt werden.

Weiterhin können übliche Zusatzstoffe wie Antioxidantien, Netzmittel, Trocknungsmittel, Antischaummittel, Verlaufshilfsmittel, Mikrotalk, Lithophene, Sikkative usw. zugesetzt werden.

Bevorzugte Trocknungsmittel sind die Naphthenate, Resinate, Oleate, Linoleate, Octoate und Maleate der Metalle Cobalt, Mangan, Chrom, Zirkonium, Eisen, Zink, Aluminium und Calcium.

Das Auftragen der aus den erfindungsgemäßen Bindemitteln hergestellten Lacke geschieht nach den üblichen Verfahren wie Spritzen, Tauchen, Gießen, Walzen, Streichen usw.

Die erfindungsgemäßen Bindemittel ergeben in Kombination mit zinkhaltigen Korrosionsschutzpigmenten lagerstabile Lackmischungen mit guten lacktechnischen Eigenschaften und verbesserten Korrosionsschutzergebnissen, sowohl bei Raumtemperaturtrocknung als auch bei Ofentrocknung (80°C bis 100°C).

Weitere Ausführungsformen der Erfindung sind den Ansprüchen 3 bis 5 zu entnehmen.

In den nachstehenden Beispielen sind die Angaben über Teile und Prozente auf das Gewicht bezogen.

3

Beispiele

1) Vergleichsbeispiele

Herstellung des Basispfropfpolymerisats

In einem mit Stickstoffeinleitungsrohr, Rührer sowie Kühl,- bzw. Heizvorrichtung versehenen 4-1-Glaskolben werden 1843 g Polybutadienöl mit einem Molekulargewicht von ca. 1800, einer Viskosität von ca. 750 mPa.s (20°C) und ca. 99 % 1,4-cis bzw. 1,4-trans Verknüpfung eingewogen und nach Zugabe von 356 g Maleinsäureanhydrid, 0,9 g Kupfernaphthenat und 0,9 g Acetylaceton unter Durchleiten eines schwachen Stickstoffstroms auf 190 bis 200°C aufgeheizt und 6 Stunden bei dieser Temperatur gehalten. Man erhält ein viskoses Öl mit einer Gesamtsäurezahl von 160. Nach Abkühlen auf 140°C werden 559 g Styrol, 6,4 g n-Dodecylmercaptan und 2,3 g Di-tert.-butylperoxid zugegeben und der Ansatz bei 140°C gerührt, bis eine Viskosität entsprechend einer Auslaufzeit nach DIN 53 211 von 52 sec, gemessen 50 %ig in Styrol im DIN-4-mm-Becher, erreicht wird.

Veresterung bzw. Amidierung

Vergleichsbeispiel 1

Nach dem Abkühlen der Harzschmelze auf 100°C werden 130 g Diethylamin während 2 Stunden zum Basispfropfpolymerisat zugetropft und die Mischung noch 2 Stunden bei 100°C gerührt. 2500 g dieser Harzschmelze werden unter Rühren in eine auf 40°C erwärmte Mischung aus 5500 g entionisiertem Wasser, 136 g 30 %iger, wäßriger Ammoniaklösung, 27,3 g Triethylamin und 37,2 g Butanonoxim dispergiert. Man erhält eine feinteilige Dispersion mit einer Säurezahl von 21,0 und einem Festgehalt von 30,4 %.

Vergleichsbeispiel 2

Herstellung wie Vergleichsbeispiel 1, aber anstelle von 130 g Diethylamin werden 179,8 g Dipropylamin eingesetzt. Die Dispersion hat eine Säurezahl von 21,1 und einen Festgehalt von 31,1 %.

Vergleichsbeispiel 3

Herstellung wie Vergleichsbeispiel 1, aber anstelle von 130 g Diethylamin werden 229,6 g Di-n-butylamin eingesetzt. Die Dispersion hat eine Säurezahl von 19,6 und einen Festgehalt von 30,7 %.

Vergleichsbeispiel 4

Herstellung wie Vergleichsbeispiel 1, aber anstelle von 130 g Diethylamin werden 131,7 g n-Butanol eingesetzt. Die Dispersion hat eine Säurezahl von 20,9 und einen Festgehalt von 30,6 %.

Vergleichsbeispiel 5

Herstellung wie Vergleichsbeispiel 1, aber anstelle von 130 g Diethylamin werden 65 g Diethylamin und 129,9 g Trimethylolpropanmonoformal eingesetzt. Die Dispersion hat eine Säurezahl von 19,3 und einen Festgehalt von 31,2 %.

Vergleichsbeispiel 6

Herstellung wie Vergleichsbeispiel 1, aber anstelle von 130 g Diethylamin werden 210 g Butylglykol eingesetzt. Die Dispersion hat eine Säurezahl von 25,5 und einen Festgehalt von 33,2 %.

II Beispiele

Herstellung des Basispfropfpolymerisats

In einem mit Stickstoffeinleitungsrohr, Rührer sowie Kühl- bzw. Heizvorrichtung versehenen 4-1-Glaskolben werden 1843 g Polybutandienöl mit einem Molekulargewicht von ca. 1800, einer Viskosität von ca. 750 mPa.s (20°C) und ca. 99 % 1,4-cis bzw. 1,4-trans Verknüpfung eingewogen und nach Zugabe von 356 g Maleinsäureanhydrid, 0,9 g Kupfernapthenat und 0,9 g Acetylaceton unter Durchleiten eines schwachen Stickstoffstroms auf 190 bis 200°C aufgeheizt und 6 Stunden bei dieser Temperatur gehalten. Man erhält ein viskoses Öl mit einer Gesamtsäurezahl von 160. Nach Abkühlen auf 140°C werden 559 g Styrol, 6,4 g n-Dodecylmercaptan und 2,3 g Di-tert.-butylperoxid zugegeben und der Ansatz bei 140°C gerührt, bis eine Viskosität entwprechend einer Auslaufzeit nach DIN 53211 von 52 sec, gemessen 50 %ig in Styrol im DIN-4-mm-Becher erreicht wird.

Imidierung mit Aminocarbonsäuren

Beispiel 1

Der Ansatz wird auf 100°C abgekühlt. Dann werden 316,7 g 6-Aminohexansäure zugegeben, anschließend wird auf 120°C aufgeheizt, 2 Stunden gerührt, auf 145°C erhitzt und das dann entstehende Reaktionswasser abdestilliert. Nach 6 Stunden ist die Wasserabscheidung beendet, die Gesamtsäurezahl der Harzschmelze beträgt 68. Von der so hergestellten Harzschmelze werden 2500 g unter Rühren in eine auf 40°C erwärmte Mischung aus 5500 g entionisiertem Wasser, 136 g 30 %igem, wäßrigen Ammoniak, 27,3 g Triethylamin und 37,2 g Butanonoxim dispergiert. Man erhält eine feinteilige Dispersion mit einer Säurezahl von 23,3 und einem Festgehalt von 32,7 %.

Beispiel 2

Herstellung wie Beispiel 1, aber anstelle von 316,7 g 6-Aminohexansäure werden 151 g 4-Aminobenzoesäure und 243 g 11-Aminoundecansäure zugegeben. Die Dispersion hat eine Säurezahl von 21,4 und einen Festgehalt von 31,9 %.

Beispiel 3

Herstellung wie Beispiel 1, aber anstelle von 316,7 g 6-Aminohexansäure werden 181,3 g Aminoessigsäure zugegeben. Die Dispersion hat eine Säurezahl von 22,9 und einen Festgehalt von 31,5 %.

Beispiel 4

Herstellung wie Beispiel 1, aber anstelle von 316,7 g 6-Aminohexansäure werden bei 140°C 158,4 g 6-Aminohexansäure und 151 g 4-Aminobenzoesäure zugegeben. Die Dispersion hat eine Säurezahl von 20,8 und einen Festgehalt von 30,9 %.

Herstellung von Korrosionsschutzgrundierungen

Die Herstellung einer zinkpigmenthaltigen Korrosionsschutzgrundierungen erfolgte in der üblichen Weise:
Die Bindemitteldispersion gemäß den Vergleichsbeispielen, bzw. gemäß den Beispielen, wird in einem Mischbehälter vorgelegt und unter schnellem Rühren werden die Pigmente und Zusatzstoffe langsam zugegeben und eingerührt. Dieses vordispergierte Mahlgut wird anschließend auf einer Perlmühle bei ca. 2400 Upm angerieben. Der fertige Lack wird 24 Stunden nach dem Anreiben mit Wasser auf eine Spritzviskosität entsprechend einer Auslaufzeit von 30 sec, gemessen im DIN-4-mm-Becher, eingestellt. Alle Lacke wurden auf pH-Wert 9 eingestellt.

**Anreiberezeptur**
(Mengenangaben in g)

| | Vergleichsbeispiele | | | | | | Beispiele | | | |
|---|---|---|---|---|---|---|---|---|---|---|
| | 1 | 2 | 3 | 4 | 5 | 6 | 1 | 2 | 3 | 4 |
| Bindemitteldispersion | 330,0 | 321,5 | 325,7 | 328,0 | 320,8 | 302,1 | 305,8 | 313,5 | 317,5 | 323,6 |
| Eisenoxid | 58,4 | | | | | | | | | |
| Zinkphosphat | 58,9 | | | | | | | | | |
| Zinkoxid | 5,9 | | | | | | | | | |
| Lithophone | 58,7 | | | | | | | | | |
| Mikrotalk | 28,6 | | | | | | | | | |
| Co-Sikkativ /8 % Co) | 0,75 | | | | | | | | | |
| Antischaummittel | 1,1 | | | | | | | | | |
| Mahlgut | 542,35 | 533,85 | 538,05 | 540,35 | 533,15 | 514,45 | 518,15 | 525,85 | 529,85 | 535,95 |
| Wasser für Spritzvis-kosität ca. 30 sec. | 36,3 | | | 37,4 | 1,0 | | 6,0 | 0,0 | 32,9 | 33,0 |
| Lackfestkörper (%) | 51,4 | | | 54,0 | 58,4 | | 56,7 | 59,3 | 52,2 | 53,4 |
| Lagerstabilität* (bei Raumtemperatur)= | i.O. | 1 Tag | sofort 2-pha-sig | 1 Wo-che | 3 Wo-chen | 1 Tag | i.O. | i.O. | i.O. | i.O. |

*) Lagerstabilität i.O.: Lagerstabilität bei Raumtemperatur >3 Monate

In den Fällen, in denen das Mahlgut weiniger als 24 Stunden lagerstabil war, wurde keine Einstellung auf Spritzverdünnung vorgenommen. Die Vergleichsbeispiele 2, 3 und 6 ergaben Lacke, die weniger als 24 Stunden lagerstabil waren. Die Vergleichsbeispiele 4 und 5 waren maximal 3 Wochen lagerstabil. Diese Vergleichsbeispiele wurden daher für die Prüfung von Wasserfestigkeit und Korrosionsschutzeigenschaften ebenfalls nicht herangezogen.

Die aus Vergleichsbeispiel 1 und den Beispielen 1, 2, 3 und 4 hergestellten Lacke wurden auf entfettete Karosseriebleche gespritzt. Die Beurteilung der auftretenden Blasen erfolgte nach DIN 53209. Dabei wird die Menge der Blasen m von 0 bis 5 und die Größe der Blasen g von 0 bis 5 gewertet (0, 1, 2, 3, 4, 5): 0 = günstigster Wert, 5 = schlechtester Wert.

Die Testergebnisse sind in den nachfolgenden Tabellen enthalten.

Dabei bedeuten:

o.B.: ohne Befund

und z.B. g 1 = kleine Blasen

g 5 = sehr große Blasen

m 1 = einige, wenige Blasen

m 5 = übersät mit Blasen

EP 0 268 035 B1

|  | Vergleichsbeispiel | Beispiele |  |  |  |
|---|---|---|---|---|---|
|  | 1 | 1 | 2 | 3 | 4 |
| Trockenfilmstärke (1m) | 45 | 45 | 45 | 45 | 45 |
| Wasserfestigkeit (Wasserlagerung nach 16 Std. Trocknung bei Raumtemperatur) |  |  |  |  |  |
| 1 Std. | o.B. | o.B. | o.B. | o.B. | o.B. |
| 3 Std. | Blasen $m_1/g_3$ | o.B. | o.B. | o.B. | Blasen $m_1/g_2$ |
| 24 Std. | Blasen $m_{3-4}/g_5$ | o.B. | o.B. | Blasen $m_2/g_{2-3}$ | Blasen $m_2/g_{2-3}$ |
| Wasserfestigkeit (Wasserlagerung nach 30'80°C Trocknung) |  |  |  |  |  |
| 1 Std. | o.B. | o.B. | o.B. | o.B. | o.B. |
| 8 Std. | o.B. | o.B. | o.B. | o.B. | o.B. |
| 24 Std. | Blasen $m_3/g_5$ | o.B. | o.B. | o.B. | o.B. |

| | Vergleichsbeispiel | Beispiele | | |
|---|---|---|---|---|
| | 1 | 1 | 3 | 4 |
| Trockenfilmstärke (μm) | 45 | 45 | 45 | 45 |
| **Salzsprühtest (DIN 50021) (nach 16 Std. Trocknung bei Raumtemperatur)** | | | | |
| 72 Std. | Blasen m1/g1 | o.B. | Blasen m1/g1 | o.B. |
| 120 Std. | Blasen m3/g2-3 | o.B. | Blasen m2/g2-3 | o.B. |
| 168 Std. | Blasen m4/g2-3 | Blasen m1/g2 | Blasen m2/g2-3 | Blasen m2/g2 |
| **Salzsprühtest (DIN 50021) (nach 30'80°C Trocknung)** | | | | |
| 72 Std. | o.B. | o.B. | o.B. | o.B. |
| 144 Std. | Blasen m2/g2 | o.B. | o.B. | o.B. |
| 240 Std. | Blasen m3-4/g2-3 | Blasen m1-2/g2 | o.B. | o.B. |

EP 0 268 035 B1

**Patentansprüche**

1. Wasserverdünnbare, zu 50 bis 100% neutralisierte Carboxylgruppen enthaltende Bindemittel auf Polybutadienbasis aus
A) 6-18 % Maleinsäureanhydrid
B) 45-65 % Polybutadien
C) 10-40 % ethylenisch ungesättigten Pfropfmonomeren
D) 3-18 % Aminocarbonsäuren.

2. Wasserverdünnbare, carboxylgruppenhaltige, modifzierte Polybutadienbindemittel nach Anspruch 1, dadurch gekennzeichnet, daß sie unter Verwendung von Polybutadien bzw. Polybutadienmischungen mit einem als Zahlenmittel bestimmten Molekulargewicht von 800 bis 5000, einer Iodzahl nach Wijs von 300 bis 470 mg Iod/g Substanz und 85 bis 99 % 1,4-cis bzw. 1,4-trans Verknüpfung hergestellt werden.

3. Polybutadienbindemittel nach Anspruch 1, dadurch gekennzeichnet, daß 50 % bis 100 % der eingebauten Anhydridgruppen mit einer Aminocarbonsäure umgesetzt sind.

4. Verfahren zur Herstellung von wasserverdünnbaren, modifizierten Polybutadienen, durch Umsetzung von Maleinsäureanhydrid mit Polybutadienen und anschließender Pfropfpolymerisation von ethylenisch ungesättigten Monomeren, dadurch gekennzeichnet, daß die Anhydridgruppe zu mindestens 50 %, bevorzugt zu mindestens 65 % mit Aminocarbonsäuren umgesetzt werden und nach Neutralisation Wasserverdünnbarkeit erhalten wird.

5. Verwendung von Bindemitteln nach Anspruch 1 als wäßriges, lufttrocknendes Korrosionsschutzbindemittel.

**Claims**

1. Water-dilutable, polybutadiene-based binders containing 50 to 100% neutralized carboxyl groups of
A) 6-18% maleic anhydride
B) 45-65% polybutadiene
C) 10-40% ethylenically unsaturated graft monomers
D) 3-18% aminocarboxylic acids.

2. Water-dilutable, carboxyl-group-containing, modified polybutadiene binders as claimed in claim 1, characterized in that they are produced using polybutadiene or polybutadiene mixtures having a number average molecular weight of 800 to 5 000 and a Wijs iodine value of 300 to 470 mg iodine/g substance and containing 85 to 99% 1,4-cis or 1,4-trans bonds.

3. Polybutadiene binders as claimed in claim 1, characterized in that 50 to 100% of the incorporated anhydride groups are reacted with an aminocarboxylic acid.

4. A process for the production of water-dilutable, modified polybutadienes by reaction of maleic anhydride with polybutadienes and subsequent graft polymerization of ethylenically unsaturated monomers, characterized in that at least 50% and preferably at least 65% of the anhydride groups are reacted with aminocarboxylic acids and dilutability with water is obtained after neutralization.

5. The use of the binders claimed in claim 1 as an aqueous, air-drying corrosion-inhibiting binder.

**Revendications**

1. Liant diluable à l'eau, contenant 50 à 100% de groupes carboxyles neutralisés, à base d'un polybutadiène obtenu à partir de:
A) 6 à 18% d'anhydride de l'acide maléique
B) 45 à 65% de polybutadiène
C) 10 à 40% de monomères de greffage à insaturation éthylénique
D) 3 à 18% d'acides aminocarboxyliques.

2. Liants selon la revendication 1 à base de polybutadiène, modifiés, contenant des groupes carboxyles et diluables à l'eau, liants caractérisés en ce qu'ils ont été préparés avec utilisation d'un polybutadiène ou d'un mélange de polybutadiènes ayant un poids moléculaire, déterminés en nombre, de 800 à 5 000, un indice d'iode selon Wijs de 300 à 470 mg d'iode/g de substance et contenant 85 à 99% de liaisons de raccordement en 1,4-cis ou 1,4-trans.

3. Liant à base de polybutadiène selon la revendication 1, caractérisé en ce que 50% à 100% des groupes anhydrides incorporés ont réagi avec un acide aminocarboxylique.

4. Procédé pour préparer des polybutadiènes modifiés, diluables à l'eau, par réaction de l'anhydride de l'acide maléique avec des polybutadiènes puis polymérisation de greffage de monomères à insaturation éthylénique, procédé caractérisé en ce qu'on fait réagir pour au moins 50%, de préférence au moins 65%, les groupes anhydrides avec des acides aminocarboxyliques et, après une neutralisation, on obtient la propriété de la diluabilité à l'eau.

5. Utilisation de liants selon la revendication 1 comme liants aqueux, séchant à l'air, pour protéger contre la corrosion.